(19) Europäisches Patentamt
European Patent Office
Office européen des brevets

(11) **EP 2 506 027 B1**

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(51) Int Cl.:
*G01S 3/786* (2006.01)     *G02B 23/02* (2006.01)
*G05D 1/08* (2006.01)      *B64G 1/36* (2006.01)
*G01C 21/02* (2006.01)

(21) Anmeldenummer: **12157653.2**

(22) Anmeldetag: **01.03.2012**

(54) **Abbildungssystem für Sternsensoren mit zwei Brennweiten**

Mapping system for star sensors with two focal lengths

Système de représentation pour capteurs d'étoiles dotés de deux objectifs focaux

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.03.2011 DE 102011001624**
**12.04.2011 DE 102011001968**

(43) Veröffentlichungstag der Anmeldung:
**03.10.2012 Patentblatt 2012/40**

(73) Patentinhaber: **Jena-Optronik GmbH**
**07745 Jena (DE)**

(72) Erfinder:
• **Kirschstein, Steffen**
**07751 Zöllnitz (DE)**
• **Dr. Schmidt, Uwe**
**07616 Bürgel (DE)**

(74) Vertreter: **Ege & Lee Patentanwälte**
**Panoramastrasse 27**
**77815 Bühl (DE)**

(56) Entgegenhaltungen:
US-A- 2 758 377     US-A- 3 251 261
US-A- 3 370 460     US-A1- 2011 051 149

• H. E. Brunelle ET AL: "Coaxial, Dual-Field Optics For a Space Sextant", Applied Optics, Vol. 2, Issue 12, pp. 1265-1269 (1963), 1. Dezember 1963 (1963-12-01), Seiten 1265-1269, XP55031255, DOI: http://dx.doi.org/10.1364/AO.2.001265 Gefunden im Internet: URL:http://www.opticsinfobase.org/view_art icle.cfm? gotourl=http%3A%2F%2Fwww.opticsin fobase.org%2FDirectPDFAccess%2FF9B122D5- CB 32-BF2F-4E0CBFFDAA97E79D_ 13249.pdf%3Fda%3D 1%26id%3D13249%26seq%3D0%26mobile%3Dn o&org =Office%20Europeen%20des%20Brevets%20% 28ak a%20European%20Patent%20Office%29 [gefunden am 2012-06-28]
• MORTARI D ET AL: "StarNav III: a three fields of view star tracker", AEROSPACE CONFERENCE PROCEEDINGS, 2002. IEEE MAR 9-16, 2002, PISCATAWAY, NJ, USA,IEEE, Bd. 1, 9. März 2002 (2002-03-09), Seiten 47-57, XP010604898, ISBN: 978-0-7803-7231-3
• Hong-Shen Fan ET AL: "A Fast and Accurate Method for Spacecraft Attitude Determination Based on a Dual-Field Star Sensor", Journal of Astronautics, 24. Juni 2011 (2011-06-24), XP55031254, DOI: CNKI:SUN:YHXB. 0.2011-06-012 Gefunden im Internet: URL:http: //www.yhxb.org.cn/Upload/PaperUpL oad/ 3854d577-5111-479c-a551-50226e0400c8.p df [gefunden am 2012-06-28]

**Beschreibung**

Die Erfindung betrifft einen Sternsensor mit einem optischen Abbildungssystem und ein Verfahren zu dessen Betrieb mit einer ein um eine optische Achse vorgegebenes Sichtfeld auf eine Sensorfläche eines Detektors entlang eines Strahlengangs abbildenden Optik.

Ein gattungsgemäßer Sternsensor ist aus der US 5 745 869 bekannt. Um einen bevorzugt unbemannten Raumflugkörper, beispielsweise einen Satelliten, ein Weltraumteleskop oder dergleichen navigieren zu können, wird dessen Raumposition gegenüber dem Sternenhimmel festgelegt. Hierzu sind in dem Rechner des Sternsensors Sternkarten hinterlegt, die mit von einem optischen Abbildungssystem aufgenommenen Lichtmustern verglichen werden. Bei Identifizierung eines Sternmusters kann aus der Position des optischen Abbildungssystems gegenüber dem Raumflugkörper dessen Lage im Weltraum berechnet werden. Zur exakten Bestimmung der Lage sind unter Anderem die optischen Eigenschaften wie Auflösung und Genauigkeit des optischen Abbildungssystems von großer Bedeutung. Das optische Abbildungssystem ist dabei aus einer Optik mit fester Brennweite und einem Detektor mit einer lichtempfindlichen Fläche gebildet, wobei die abgespeicherten Sternbilder mittels der Gesetze der Abbildungsgeometrie mit signifikanten Lichtmustern des Detektors verglichen und identifiziert werden. Hierbei ist für eine schnelle Orientierung des Sternsensors ein großes Sichtfeld, also eine kleine Brennweite der Optik, von Vorteil. Zur Erzielung einer hohen Auflösung der Sternpositionen und damit einer hohen Genauigkeit der Lageregelung des Raumflugkörpers hingegen ist eine große Brennweite von Vorteil. Eine automatisierte Schaltung zwischen zwei Wechselobjektiven erfordert über die Lebensdauer stabile, mechanisch bewegte Teile wie Shutter und dergleichen und ist daher entsprechend teile- und kostenaufwendig sowie fehlerbehaftet. Zoom-Objektive sind dabei ebenfalls mit mechanisch bewegten Bauteilen behaftet und ungenau. Deswegen ist die Optik bekannter Abbildungssysteme ein Kompromiss zwischen den Idealbrennweiten zur Auffindung eines Sternmusters und der optischen Auflösung dieser.

Aus der US 2011/0051149 A1 ist weiterhin ein Verfahren zur Lageregelung eines Raumflugkörpers mittels eines optischen Abbildungssystems bekannt. Hierbei wird mittels eines zentralen Objektivs mit großer Brennweite und kreisförmiger Apertur ein erstes Lichtmuster und mittels eines ringförmigen, das zentrale Objektiv umgebenden Prismas ein zweites weitwinkliges Lichtmuster auf eine gemeinsame Sensorfläche eingestrahlt. Hierdurch wird die Genauigkeit der Lageregelung durch die Auflösung des zentralen Objektivs des optischen Abbildungssystems begrenzt.

In H.E. Brunelle et al.:"Coaxial, Dual-Field Optics For a Space Sextant", Applied Optics, Vol. 2, Issue 12, pp. 1265 - 1269 (1963) ist eine Anordnung zur Bestimmung der Lage eines Raumfahrzeugs bekannt, bei der unterschiedlich vergrößerte Sehfelder mittels eines zentralen Objektivs und eines um dieses angeordneten Hohlspiegelteleskops auf einer gemeinsamen Sensorfläche abgebildet werden. Die Abbildung der einzelnen Sehfelder erfolgt dabei geometrisch abgegrenzt voneinander auf der Sensorfläche.

In Daniele Mortari et al.:"StarNav III: a three fields of view tracker", IEEE Aerospace Conference , Mar 9-16, 2002, Bd. 1, 9. März 2002 (2002-03-09), Seiten 47-57, XP010604898, ISBN: 978-0-7803-7231-3 ist ein Sternsensor offenbart, der Sternbilder aus drei orthogonal zueinander angeordneten Sehfeldern mittels einer einzigen Sensorfläche erfasst.

Aufgabe der Erfindung ist die Verbesserung der Genauigkeit der Lageregelung mittels Sternsensoren mit einem im Wesentlichen unveränderten zentralen Objektiv bei schnellem Auffinden von Referenzlichtquellen beziehungsweise eine weitere Annäherung an die Idealbrennweiten, ohne mechanisch bewegte Bauteile zu verwenden.

Die Aufgabe wird durch den Gegenstand des Anspruchs 1 und das Verfahren gemäß Anspruch 5 gelöst. Die von diesen abhängigen Unteransprüche geben vorteilhafte Ausführungsformen wieder.

Der vorgeschlagene Sternsensor weist ein optisches Abbildungssystem mit einer ein um eine optische Achse vorgegebenes Sichtfeld auf eine Sensorfläche eines Detektors entlang eines Strahlengangs abbildenden Optik auf, wobei die Optik ein in Form eines zentralen Objektivs mit einer ersten Brennweite ausgebildetes Teilobjektiv und ein in Form eines dieses umgebenden Spiegellinsenobjektivs ausgebildetes Teilobjektiv mit größerer Brennweite mit gleichzeitig auf die Sensorfläche abbildenden und mittels einer Recheneinrichtung voneinander zumindest teilweise voneinander getrennten Lichtmustern aufweist. Durch die gleichzeitige Abbildung zweier auf der gesamten Sensorfläche eines Detektors fokussierter Lichtmuster, beispielsweise einem Active Pixel Sensor (APS) wie CCD-Chip, bevorzugt einem CMOS (Complementary Metal Oxide Semiconductor, komplementärer Metall-Oxid-Halbleiter) kann eine Auswertung des im Bereich der unterschiedlichen Sichtfelder (FOV, field of view) der Teilobjektive liegender Sternausschnitt durch Trennung dieser mittels der Recheneinrichtung erfolgen, ohne mechanische oder optische Schaltungen vorzunehmen. Durch die Anordnung der Teilobjektive um dieselbe optische Achse, wobei das Spiegellinsenobjektiv gegenüber dem bevorzugt als Teleobjektiv mit größerem Sichtfeld ausgebildeten zentralen Objektiv eine nochmals vergrößerte Brennweite bei kleinerem Sichtfeld aufweist, können nach entsprechender Trennung der beiden von der Sensorfläche erfassten Lichtmuster mit dem zentralen Objektiv mit großem Sichtfeld ein großer Sternausschnitt beobachtet und charakteristische Sternmuster schnell erkannt werden und mit dem kleineren Sichtfeld des Spiegellinsenobjektivs eine größere Auflösung eines erkannten Sternmusters erzielt werden, so dass eine Lageregelung auf einen Wert kleiner als eine Bogensekunde erreicht werden kann.

Es hat sich insbesondere aus Gründen einer einfachen Ausbildung der Teilobjektive sowie der analytischen Trennung und Zuordnung der erfassten Lichtmuster auf die Sichtfelder der Teilobjektive als vorteilhaft erwiesen, wenn die optische Achse der Teilobjektive orthogonal zur Sensorfläche angeordnet ist. Hierzu können gemäß einer bevorzugten Ausführungsform das zentrale Objektiv eine um die optische Achse kreisflächige erste Apertur und das Spiegellinsenobjektiv eine radial außerhalb der ersten Apertur angeordnete ringförmige zweite Apertur aufweisen. Das Spiegellinsenobjektiv kann im einfachsten Fall zwei Reflexionsflächen, beispielsweise ringförmige oder ringsegmentförmige Spiegel aufweisen, die in katadioptrischer Weise den Strahlengang innerhalb der Optik zweifach umlenken. Weitere vorteilhafte Ausführungsbeispiele können mehrere, beispielswese vier Reflexionsflächen aufweisen. Zur Korrektur von systembedingten Abbildungsfehlern katadioptrischer Spiegelobjektive sind entsprechende Korrekturlinsen zur Bildung des Spiegellinsenobjektivs vorgesehen.

Als besonders vorteilhaft hat sich hierbei gezeigt, wenn zumindest eine der Linsen der Optik von beiden Teilobjektiven genutzt wird. Gemäß dem erfinderischen Gedanken kann zur Vereinfachung des Sternsensors und Reduzierung von Gewicht und Bauraum ein Teil der Linsen des ersten Teilobjektivs zur Fehlerkorrektur der Feldkorrektur des Sichtfelds des zweiten Teilobjektivs benutzt werden. Hierbei können in den Strahlengang des zentralen Objektivs alle Linsen der Optik und zwischen zwei Reflexionsflächen des Spiegellinsenobjektivs ein Teil der Linsen in den Strahlengang des Objektivs zur Feldkorrektur des Spiegelobjektivs einbezogen sein.

Das Spiegellinsenobjektiv weist bevorzugt eine negative Brennweite auf.

Die Aufgabe wird im Weiteren durch ein Verfahren zum Betrieb des beschriebenen Sternsensors gelöst, bei dem von dem Detektor erfasste Lichtmuster beider Teilobjektive mittels einer Recheneinrichtung voneinander getrennt werden. Hierbei wird aus den getrennten Lichtmustern, bevorzugt aus dem Lichtmuster des Teilobjektivs mit dem kleineren Sichtfeld durch Vergleich mit gespeicherten Sternkarten, Sternmustern und dergleichen nach bekannten Verfahren Lagegrößen wie Eulerwinkel, Quaternionen und dergleichen berechnet, die vom Sternsensor an Steuerungselemente des Raumflugkörpers zur Lageregelung übermittelt werden.

Die erfindungsgemäße Aufgabe der Trennung der mittels desselben Detektors erfassten Lichtmuster zur Berechnung der Lagegrößen erfolgt gemäß einer vorteilhaften Ausführungsform des Verfahrens, indem die Recheneinrichtung mittels eines Vergleichs von gespeicherten Lichtmustern von Sternkarten und einer auf dem Detektor erfassten Signalmatrix einer Brennweite ein dem Sichtfeld entsprechendes Lichtmuster zuordnet und nicht in dem zugeordneten Lichtmuster vorhandene Lichtwerte der anderen Brennweite zuordnet. Beispielsweise werden gespeicherte Sternkarten auf die Brennweite und damit das Sichtfeld eines Teilobjektivs normiert und mit der Signalmatrix verglichen. Dabei wird zuerst anhand von signifikanten Lichtpunkten des gespeicherten Lichtmusters beispielsweise anhand eines Mustervergleichs mittels Bildbearbeitungsverfahren ermittelt, welcher Ausschnitt einer Sternkarte auf der Sensorfläche des Detektors abgebildet ist. Anschließend werden auf diesen Ausschnitt nicht zutreffende Bildpunkte, die bevorzugt einen kleineren Ausschnitt der Sternkarte bei gleicher Ausrichtung der Optik zeigen, dem Lichtmuster des anderen Teilobjektivs zumindest teilweise zugeordnet. Eine Zuordnung kann auf signifikante Lichtpunkte beschränkt sein, beispielsweise auf Sternen einer vorgegebenen Helligkeitsklasse. Mittels des auf diese Weise gewonnenen Lichtmusters mit höherer Auflösung auf signifikante Sternkonstellationen wird die Lagebestimmung durch den Sternsensor durchgeführt und der Lageregelung des Raumflugkörpers zugeführt.

Alternativ oder zusätzlich kann eine Trennung der beiden Lichtmuster der Teilobjektive mittels der Analyseneinrichtung getrennt werden, indem diese eine Positionsänderung von auf dem Detektor abgebildeten Lichtpunkten der auf dem Detektor abgebildeten Signalmatrix über die Zeit erfasst und abhängig von deren Änderungsgeschwindigkeit einem der beiden Brennweiten und damit Sichtfeldern der Teilobjektive zuordnet. Hierbei können beispielsweise zwei zu unterschiedlichen Zeitpunkten in einem vorgegebenen Zeitabstand aufgenommene Signalmatrizes miteinander verglichen werden. Dabei werden einzelne charakteristische Lichtpunkte und/oder Punktmuster bevorzugt abhängig von der Entfernung dieser von der optischen Achse erfasst und deren Abstandsänderungen von Signalmatrix zu Signalmatrix ermittelt. Bei vorgegebenem Zeitabstand können bei sich bewegendem Raumflugkörper und damit sich änderndem Sichtfeld aufgrund der optischen Abbildungsgeometrie die Brennweiten der Teilobjektive ermittelt und die Lichtpunkte, vorzugsweise charakteristische Lichtpunkte der Signalmatrix den einzelnen Lichtmustern der Teilobjektive zugeordnet werden.

Im Weiteren kann unter konstanten Bedingungen anhand eines vom Detektor erfassten Lichtmusters und der Lage zumindest eines von beiden Teilobjektiven erfassten und anhand eines gespeicherten Lichtmusters identifizierten Lichtpunktes ein Abbildungsverhältnis beider Brennweiten kalibriert werden. Hierbei können ein oder mehrere charakteristische Lichtpunkte beispielsweise von anhand einer Sternkarte identifizierten Sternen von dem Detektor erfasst und deren jeweils von einem Teilobjektiv auf die Sensorfläche des Detektors projizierten Lage ausgewertet werden. Aus deren Abstand von der optischen Achse kann das Abbildungsverhältnis der beiden Teilobjekte zueinander berechnet und eine Kalibration der Teilobjektive aufeinander erfolgen.

Die Erfindung wird anhand der in den Figuren 1 bis 7 dargestellten Ausführungsbeispiele näher erläutert. Dabei zeigen:

Figur 1     einen schematisch dargestellten Sternsensor im Schnitt,

Figur 2     eine gegenüber dem optischen Abbildungssystem der Figur 1 abgeändertes optisches Abbildungssystem,

Figur 3     einen Raumflugkörper mit einem Sternsensor in schematischer Darstellung,

Figur 4     Sichtfeldern der Teilobjektive entsprechende Lichtmuster in schematischer Darstellung,

Figur 5     den Raumflugkörper der Figur 3 während einer Drehung,

Figur 6     einen Ablauf der Entstehung der Lichtmuster der Figur 4 auf der Sensorfläche, und

Figur 7     eine Auswerteprozedur der auf der Sensorfläche abgebildeten Lichtmuster.

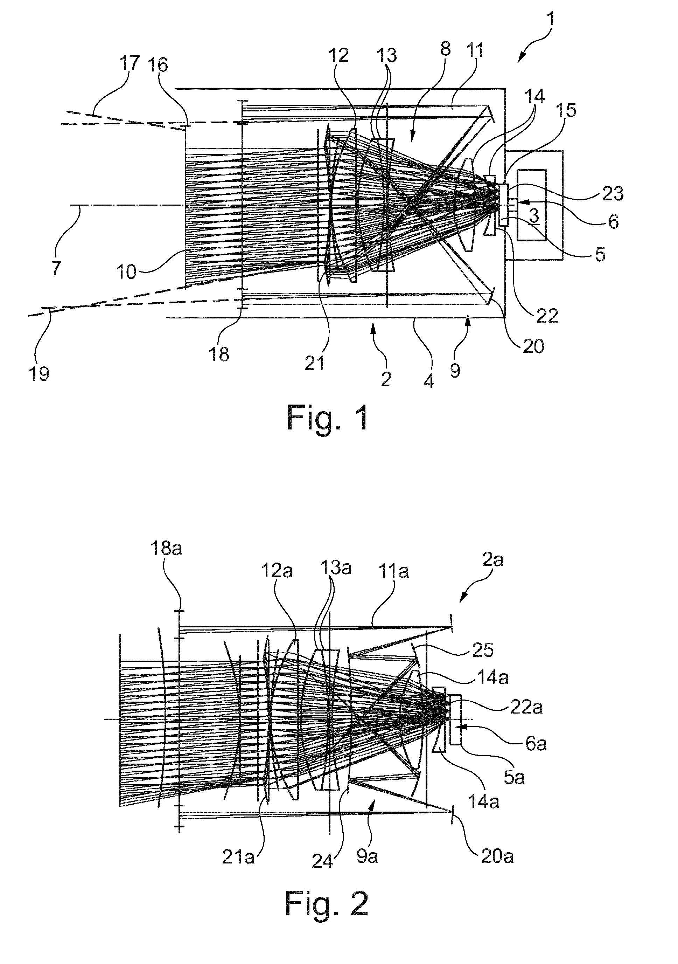

Figur 1 zeigt einen Schnitt durch den schematisch dargestellten Sternsensor 1, der in einem Raumflugkörper zu dessen Lageregelung eingesetzt wird und die Lage des Raumflugkörpers im Raum erfasst und an entsprechende Steuereinrichtungen des Raumflugkörpers ausgibt. Hierzu nimmt der Sternsensor 1 mittels des optischen Abbildungssystems 2 Ausschnitte des Sternenhimmels und vergleicht diese mit in der Recheneinrichtung 3 gespeicherten Sternkarten.

Das optische Abbildungssystem ist aus der Optik 4 und dem Detektor 5 mit der Sensorfläche 6 gebildet. Die Optik 4 ist um die senkrecht zur Sensorfläche 6 aufgerichtete optische Achse 7 angeordnet und besteht aus den Teilobjektiven 8, 9, deren Strahlengänge 10, 11 teilweise angedeutet sind. Das Teilobjektiv 8 ist als zentrales Objektiv in Form eines an sich bekannten Teleobjektivs mit entlang der optischen Achse angeordneten Linsen 12, 13 gebildet, das über die Abschlusslinsen 14 das Lichtmuster 15 auf der Sensorfläche 6 des Detektors 5 abbildet. Die Anordnung der Linsen 12, 13, 14 bestimmen die Brennweite des Teilobjektivs 8 und in Verbindung mit der kreisflächenförmigen Apertur 18 dessen Sichtfeld 17.

Das Teilobjektiv 9 ist als katadioptrisches System in Form eines Spiegellinsenobjektivs mit der kreisringförmigen Apertur 18 mit dem Sichtfeld 19 ausgebildet. Von der Apertur 16 wird der Strahlengang 11 über die Reflexionsfläche 20, anschließend über die der Feldkorrektur dienenden Linsen 12, 13, die Reflexionsfläche 21 und Abschlusslinsen 14 als Lichtmuster 22, das das Lichtmuster 15 des ersten Teilobjektivs 8 zumindest teilweise überlagert, auf der Sensorfläche 6 abgebildet. Durch die gemeinsame Nutzung der Linsen 12, 13 und Abschlusslinsen 14 wird ein kompakter, kostengünstiger und einfacher Aufbau der Optik 4 erzielt.

Das Sichtfeld 19 des Teilobjektivs 9 ist dabei kleiner als das Sichtfeld 17 des Teilobjektivs 8, so dass mittels der Optik 4 bei entsprechender Trennung der beiden als Signalmatrix 23 auf der Sensorfläche 6 gemeinsam abgebildeten Lichtmuster 15, 22 durch die Recheneinrichtung 3 sowohl mittels des großen Sichtfelds 17 ein Sternausschnitt besser übersehen und erkannt werden kann als auch eine hohe Auflösung eines avisierten Sternausschnitts mittels des kleinen Sichtfelds 19 erzielt wird.

Die Sichtfelder 17, 19 stehen in einer festen Beziehung zueinander und sind durch die Formel

$$FOV(RO) = 1/x * FOV(ZO)$$

gegeben, wobei FOV(RO) das Sichtfeld 19 des Teilobjektivs 9 und FOV(ZO) das Sichtfeld 17 des Teilobjektivs 8 bedeutet und x die Werte $2 < x < 12$, bevorzugt $8 < x < 10$ annehmen kann. Dementsprechend wird der Betrag der Brennweite des Teilobjektivs 9 um das x-fache gegenüber der Brennweite des Teilobjektivs 8 vergrößert. In dem gezeigten Ausführungsbeispiel ist die Brennweite des Teilobjektivs 9 negativ ausgelegt.

Figur 2 zeigt das zu dem optischen Abbildungssystem 2 der Figur 1 ähnliche optische Abbildungssystem 2a in schematischer Schnittdarstellung. Im Unterschied zu dem als Zweispiegler-System ausgebildeten Teilobjektiv 9 der Figur 1 ist das Teilobjektiv 9a als Spiegellinsenobjektiv in Form eines Vierspiegler-Systems ausgebildet, bei dem der Strahlengang 11 a von der Apertur 18a mittels der Reflexionsflächen 20a,24, 25 mehrfach gespiegelt, über die Linsen 12a, 13a, die Reflexionsfläche 21 a und die Abschlusslinsen 14a auf der Sensorflä-che 6a des Detektors 5a als Lichtmuster 22a abgebildet wird. Durch den durch Mehrfachreflexion verlängerten Strahlengang 11a wird eine weitere Vergrößerung des Teilobjektivs 9a gegenüber dem Teilobjektiv 9 der Figur 1 erzielt.

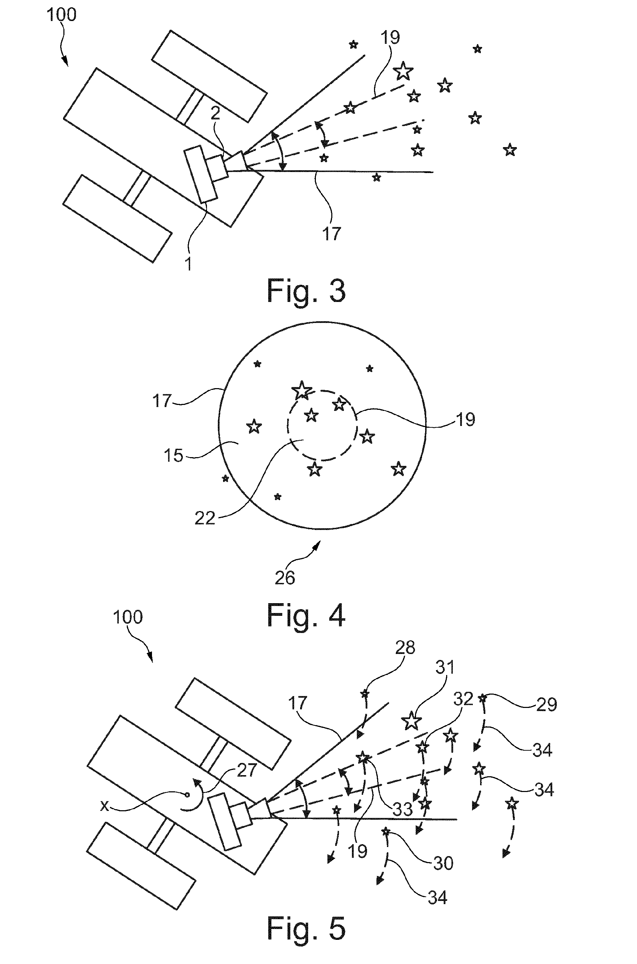

Figur 3 zeigt in schematischer Darstellung den Raumflugkörper 100 mit dem fest angebrachten Sternsensor 1. Der Sternsensor 1 enthält ein oder mehrere zueinander in unterschiedlichen Blickrichtungen angeordnete optische Abbildungssysteme 2, dessen Teilobjektive die Sichtfelder 17, 19 beobachten und als Lichtmuster auf dessen Sensorfläche abbilden. Aus der Figur 4 gehen die auf eine Ebene 26 projizierten Sichtfelder 17, 19 der Teilobjektive 8, 9, 9a der Figuren 1 und 2 hervor. Aufgrund der größeren Brennweite des Spiegellinsenobjektivs deckt dessen Sichtfeld 19 eine kleinere Fläche ab als das Sichtfeld 17 des zentralen Objektivs. Hierbei wird das Sichtfeld 17 für geringe und mittlere Auflösung und das Sichtfeld 19 für eine hohe Auflösung der Lage des Raumflugkörpers 100 eingesetzt, indem die entsprechenden Lichtmuster 15, 22 mit den gespeicherten Sternkarten verglichen werden.

Figur 5 zeigt den Raumflugkörper 100 während eines Manövers um die Raumachse x in Richtung des Pfeils 27. Hierbei wandern die beispielhaft ausgewählten Lichtpunkte 28 - 33 in entgegengesetzte Richtung der Pfeile 34, womit ein neues Lichtmuster entsteht, welches erneut mit den gespeicherten Sternkarten verglichen wird und aus dem die neue Lage des Raumflugkörpers 100 ermittelt wird. Hierbei werden die in dem Sichtfeld 19 des Teilobjektivs 9 aufgrund seiner größeren Brennweite nicht nur vergrößert sondern verlagern sich um einen größeren Winkelbetrag, so dass unter Verwendung der Brennweiten aus dem Verlagerungswinkel der Lichtpunkte 28 - 33 die Zugehörigkeit zu den einzelnen Lichtmustern 15, 22 der Figur 4 ermittelt werden kann. Weiterhin kann aufgrund der Signalform der Pfeile 34 zumindest grob und schnell abgeschätzt werden, um welche der drei Raumachsen sich der Raumflugkörper dreht. Insbesondere bei einer Auswertung der Signalmatrizen der Sensorflächen mehrerer Sternsensoren kann eine schnelle Orientierung durchgeführt werden. Sind beispielsweise die Pfeile 34 kreisbogenförmig ausgebildet, findet eine Rotation um die Raumachse x statt. Bewegungen oder Mischbewegungen um andere Raumachsen erzeugen dabei jeweils typische Pfeilformen. Hierbei wird vorausgesetzt, dass die Sensorflächen der Sternsensoren jeweils an einer Raumachse angeordnet sind. Ist dies nicht der Fall, kann durch entsprechende Raumtransformation die Pfeilform der Pfeile entsprechend abgeleitet werden.

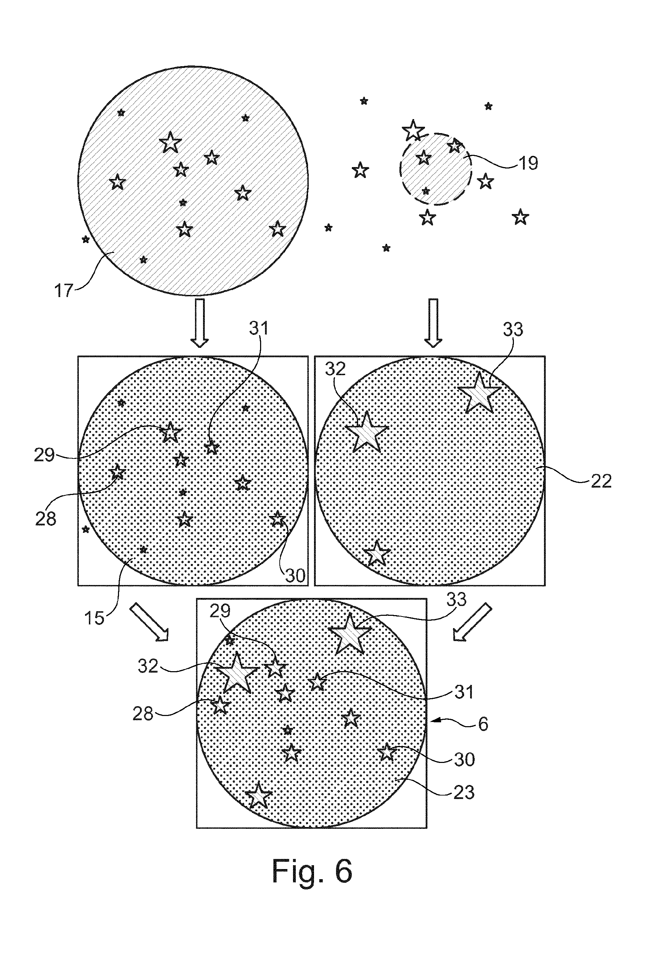

Figur 6 zeigt die Entstehung der Lichtmuster 15, 22 auf der Sensorfläche 6. Die auf eine Ebene projizierten Sichtfelder 17, 19 werden durch entsprechende Fokussierung der Teilob-jektive auf die gesamte Sensorfläche aufgebracht. Hierdurch werden die Lichtpunkte 28 - 31 des Lichtmusters 15 und die Lichtpunkte 32, 33 des Lichtmusters 22 gemeinsam auf der Sensorfläche 6 abgebildet und anhand der daraus entstehenden Signalmatrix 23 ausgewertet.

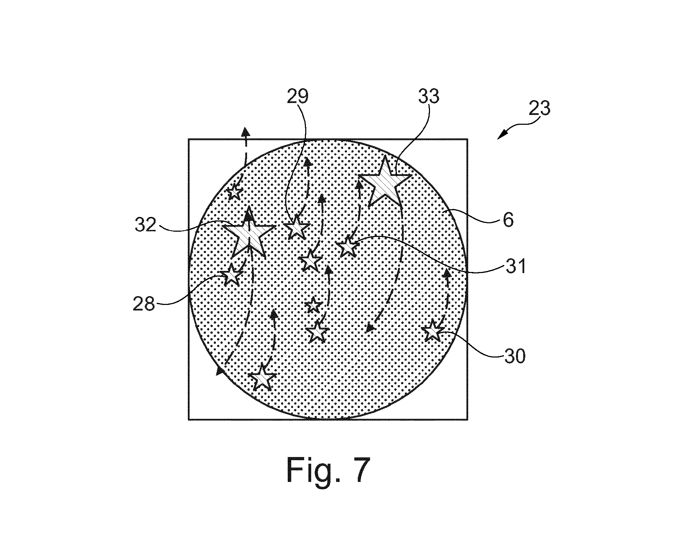

Figur 7 zeigt die Signalmatrix 23 der Sensorfläche 6 bei rotierendem Raumflugkörper 100 der Figur 3. Infolge der hier negativen Brennweite des Teilobjektivs 9 der Figur 1 wandern die Lichtpunkte 32, 33 des Lichtmusters des Teilobjektivs 9 aufgrund der längeren Brennweite des Teilobjektivs 9 nicht nur um einen größeren Winkelbetrag sondern aufgrund des negativen Vorzeichens auch in die entgegengesetzte Richtung als die Lichtpunkte 29 bis 31 des Lichtmusters des Teilobjektivs 8. Hierdurch wird eine besonders schnelle Zuordnung der Lichtpunkte 28 - 33 zu den einzelnen Lichtmustern ermöglicht.

**Bezugszeichenliste**

| | |
|---|---|
| 1 | Sternsensor |
| 2 | optisches Abbildungssystem |
| 2a | optisches Abbildungssystem |
| 3 | Recheneinrichtung |
| 4 | Optik |
| 5 | Detektor |
| 5a | Detektor |
| 6 | Sensorfläche |
| 6a | Sensorfläche |
| 7 | optische Achse |
| 8 | Teilobjektiv |
| 9 | Teilobjektiv |
| 9a | Teilobjektiv |
| 10 | Strahlengang |
| 11 | Strahlengang |
| 11a | Strahlengang |
| 12 | Linse |
| 12a | Linse |
| 13 | Linse |
| 13a | Linse |
| 14 | Abschlusslinse |
| 14a | Abschlusslinse |
| 15 | Lichtmuster |
| 16 | Apertur |
| 17 | Sichtfeld |
| 18 | Apertur |
| 18a | Apertur |
| 19 | Sichtfeld |
| 20 | Reflexionsfläche |
| 20a | Reflexionsfläche |
| 21 | Reflexionsfläche |
| 21a | Reflexionsfläche |
| 22 | Lichtmuster |
| 22a | Lichtmuster |
| 23 | Signalmatrix |
| 24 | Reflexionsfläche |
| 25 | Reflexionsfläche |
| 26 | Ebene |
| 27 | Pfeil |
| 28 | Lichtpunkt |
| 29 | Lichtpunkt |
| 30 | Lichtpunkt |
| 31 | Lichtpunkt |
| 32 | Lichtpunkt |
| 33 | Lichtpunkt |
| 34 | Pfeil |
| 100 | Raumflugkörper |
| x | Raumachse |

**Patentansprüche**

1.   Sternsensor (1) mit einem optischen Abbildungssystem (2, 2a) mit einer ein um eine optische Achse (7) vorgegebenes Sichtfeld (17, 19) auf eine Sensorfläche (6, 6a) eines Detektors (5, 5a) entlang eines Strahlengangs (10, 11, 11 a) abbildenden Optik (4), **dadurch gekennzeichnet, dass** die Optik (4) ein in Form eines zentralen Objektivs mit einer ersten Brennweite ausgebildetes, ein erstes Sichtfeld (17) auf die gesamte Sensorfläche (6, 6a) fokussierendes Teilobjektiv (8) und ein in Form eines dieses umgebenden Spiegellinsenobjektivs ausgebildetes, ein zweites Sichtfeld (19) auf die gesamte Sensorfläche (6, 6a) fokussierendes Teilobjektiv (9, 9a) mit größerer Brennweite mit gleichzeitig auf die Sensorfläche (6, 6a) abbildenden und mittels einer Recheneinrichtung (3) zumindest teilweise voneinander getrennten, auf der Sensorfläche (6, 6a) abgebildeten Lichtmustern (15, 22, 22a) aufweist.

2. Sternsensor (1) nach Anspruch 1, **dadurch gekennzeichnet, dass** zumindest eine der Linsen (12, 12a, 13, 13a) der Optik (4) von beiden Teilobjektiven (8, 9, 9a) genutzt wird.

3. Sternsensor (1) nach Anspruch 1 oder 2, **dadurch gekennzeichnet, dass** in den Strahlengang (10) des ersten Teilobjektivs (8) alle Linsen der Optik (4) und in den Strahlengang des zweiten Teilobjektivs (9, 9a) zumindest ein Teil der Linsen der Optik zur Feldkorrektur des Teilobjektivs (9, 9a) einbezogen sind.

4. Sternsensor (1) nach einem der Ansprüche 1 bis 3, **dadurch gekennzeichnet, dass** das zweite Teilobjektiv (9, 9a) eine negative Brennweite aufweist.

5. Verfahren zum Betrieb eines Sternsensors (1) gemäß den Ansprüchen 1 bis 4, **dadurch gekennzeichnet, dass** von dem Detektor (5, 5a) erfasste Lichtmuster (15, 22, 22a) beider Teilobjektive (8, 9, 9a) mittels einer Recheneinrichtung (3) voneinander getrennt werden.

6. Verfahren nach Anspruch 5, **dadurch gekennzeichnet, dass** die Recheneinrichtung (3) mittels eines Vergleichs von gespeicherten Lichtmustern von Sternkarten und einer auf dem Detektor (5, 5a) aufgenommenen Signalmatrix (23) eines Teilobjektivs (8) ein dem Sichtfeld (17) entsprechendes Lichtmuster (15) zuordnet und nicht in dem zugeordneten Lichtmuster (15) vorhandene Lichtwerte dem anderen Teilobjektiv (9, 9a) zuordnet.

7. Verfahren nach Anspruch 5 oder 6, **dadurch gekennzeichnet, dass** die Recheneinrichtung (3) eine Positionsänderung von auf dem Detektor (5, 5a) abgebildeten Lichtpunkten der Signalmatrix (23) über die Zeit erfasst und abhängig von deren Änderungsgeschwindigkeit einem der beiden Teilobjektive (8, 9, 9a) zuordnet.

8. Verfahren nach einem der Ansprüche 5 bis 7, **dadurch gekennzeichnet, dass** unter konstanten Bedingungen einer vom Detektor (5, 5a) erfassten Lichtmatrix (23) und der Lage zumindest eines von beiden Teilobjektiven (8, 9, 9a) erfassten und anhand eines gespeicherten Lichtmusters identifizierten Lichtpunktes ein Abbildungsverhältnis beider Brennweiten der Teilobjektive (8, 9, 9a) kalibriert wird.

9. Verfahren nach einem der Ansprüche 5 bis 8, **dadurch gekennzeichnet, dass** die Lichtmuster (15, 22, 22a) beider Teilobjektive (8, 9, 9a) vollflächig auf der Sensorfläche (6, 6a) abgebildet werden und die erfasste Lichtmatrix auf Sternbewegungen untersucht wird.

10. Verfahren nach Anspruch 9, **dadurch gekennzeichnet, dass** Lichtpunkte (28, 29, 30, 31, 32, 33) unterschiedlicher Bewegungsgradienten untersucht und abhängig von deren Bewegungsgradienten einem der beiden Lichtmuster (15, 22, 22a) zugeordnet werden.

11. Verfahren nach Anspruch 9 oder 10, **dadurch gekennzeichnet, dass** ein abhängig vom Lichtmuster (15, 22, 22a) ermittelter Linienverlauf in der Signalmatrix (23) einer Verdrehung um einen oder mehrere Winkel der drei Raumachsen (x) eines Raumflugkörpers (100) zugeordnet wird.

12. Verfahren nach einem der Ansprüche 5 bis 11, **dadurch gekennzeichnet, dass** bei einem Teilobjektiv (9, 9a) mit negativer Brennweite Lichtpunkte (28, 29, 30, 31, 32, 33) den Lichtmustern (15, 22, 22a) mittels einer Auswertung deren Bewegungsrichtung zugeordnet werden.

## Claims

1. Star sensor (1) having an optical imaging system (2, 2a) with an optical unit (4) which images a field of view (17, 19), prescribed by an optical axis (7), onto a sensor surface (6, 6a) of a detector (5, 5a) along a beam path (10, 11, 11a), **characterized in that** the optical unit (4) has a partial objective (8), which is designed in the form of a central objective with a first focal length, and focuses a first field of view (17) onto the entire sensor surface (6, 6a), and a partial objective (9, 9a), which is designed in the form of a mirror-lens objective surrounding said partial objective (8) and focuses a second field of view (19) onto the entire sensor surface (6, 6a) and has a longer focal length and light patterns (15, 22, 22a) simultaneously imaging onto the sensor surface (6, 6a) and at least partially separated from one another by means of a computing device (3) imaged on the sensor surface (6, 6a).

2. Star sensor (1) according to Claim 1, **characterized in that** at least one of the lenses (12, 12a, 13, 13a) of the optical unit (4) is used by both partial objectives (8, 9, 9a).

3. Star sensor (1) according to Claim 1 or 2, **characterized in that** all the lenses of the optical unit (4) are included in the beam path (10) of the first partial objective (8), and at least some of the lenses of the optical unit are included in the beam path of the second partial objective (9, 9a) for the purpose of field correction of the partial objective (9, 9a).

4. Star sensor (1) according to one of Claims 1 to 3, **characterized in that** the second partial objective (9, 9a) has a negative focal length.

5. Method for operating a star sensor (1) in accordance with Claims 1 to 4, **characterized in that** light patterns (15, 22, 22a), detected by the detector (5, 5a), of the two partial objectives (8, 9, 9a) are separated from one another by means of a computing device (3).

6. Method according to Claim 5, **characterized in that** by means of a comparison of stored light patterns of star maps and a signal matrix (23), accommodated on the detector (5, 5a), of a partial objective (8) the computing device (3) assigns a light pattern (15) corresponding to the field of view (17), and does not assign to the other partial objective (9, 9a) light values present in the assigned light pattern (15).

7. Method according to Claim 5 or 6, **characterized in that** the computing device (3) detects over time a change in position of light points of the signal matrix (23) which are imaged on the detector (5, 5a), and assigns it to one of the two partial objectives (8, 9, 9a) as a function of its rate of change.

8. Method according to one of Claims 5 to 7, **characterized in that** an imaging ratio of the two focal lengths of the partial objective (8, 9, 9a) is calibrated under constant conditions of a light matrix (23) detected by the detector (5, 5a), and of the position of at least one light point detected by the two partial objectives (8, 9, 9a) and identified with the aid of a stored light pattern.

9. Method according to one of Claims 5 to 8, **characterized in that** the light patterns (15, 22, 22a) of the two partial objectives (8, 9, 9a) are imaged over the entire surface of the sensor (6, 6a), and the detected light matrix is examined for star movements.

10. Method according to Claim 9, **characterized in that** light points (28, 29, 30, 31, 32, 33) of different movement gradients are examined and assigned to one of the two light patterns (15, 22, 22a) as a function of their movement gradients.

11. Method according to Claim 9 or 10, **characterized in that** a line profile, determined as a function of the light pattern (15, 22, 22a), in the signal matrix (23) is assigned to a rotation to one or more angles of the three spatial axes (x) of a spacecraft (100).

12. Method according to one of Claims 5 to 11, **characterized in that** in the case of a partial objective (9, 9a) with a negative focal length light points (28, 29, 30, 31, 32, 33) are assigned to the light patterns (15, 22, 22a) by means of an evaluation of their direction of movement.

**Revendications**

1. Capteur stellaire (1) avec un système de reproduction optique (2, 2a) avec une optique (4) reproduisant sur une surface de capteur (6, 6a) d'un détecteur (5, 5a), le long d'une trajectoire de faisceau (10, 11, 11a) un champ visuel (17, 19) prédéfini autour d'un axe optique (7), **caractérisé en ce que** l'optique (4) comporte un objectif partiel (8) conçu sous la forme d'un objectif central, concentrant un premier champ visuel (17) sur l'ensemble de la surface de capteur (6, 6a) avec une première distance focale et un objectif partiel (9, 9a) conçu sous la forme d'un objectif catadioptrique entourant ce dernier, concentrant un deuxième champ visuel (19) sur l'ensemble de la surface de capteur (6, 6a) avec une distance focale plus importante, avec des motifs lumineux (15, 22, 22a) reproduisant simultanément sur la surface de capteur (6, 6a) et séparés les uns des autres au moins en partie au moyen d'un dispositif de calcul (3), reproduits sur la surface de capteur (6, 6a).

2. Capteur stellaire (1) selon la revendication 1, **caractérisé en ce qu'**au moins l'une des lentilles (12, 12a, 13, 13a) de l'optique (4) est utilisée par les deux objectifs partiels (8, 9, 9a).

3. Capteur stellaire (1) selon la revendication 1 ou la revendication 2, **caractérisé en ce que** dans la trajectoire de faisceau (10) du premier objectif partiel (8), toutes les lentilles de l'optique (4) et dans la trajectoire de faisceau du deuxième objectif partiel (9, 9a), au moins une partie des lentilles de l'optique sont impliquées pour la correction de champ de l'objectif partiel (9, 9a).

4. Capteur stellaire (1) selon l'une quelconque des revendications 1 à 3, **caractérisé en ce que** le deuxième objectif partiel (9, 9a) présente une distance focale négative.

5. Procédé destiné à faire fonctionner un capteur stellaire (1) selon les revendications 1 à 4, **caractérisé en ce que** des motifs lumineux (15, 22, 22a) des deux objectifs partiels (8, 9, 9a) détectés par le détecteur (5, 5a) sont séparés les uns des autres au moyen d'un dispositif de calcul (3).

6. Procédé selon la revendication 5, **caractérisé en ce qu'**au moyen d'une comparaison de motifs lumineux mémorisés de cartes du ciel et d'une matrice de signaux (23) d'un objectif partiel (8) enregistrée sur le détecteur (5, 5a), le dispositif de calcul (3) affecte un motif lumineux (15) correspondant au champ visuel (17) et n'affecte pas à l'autre objectif partiel (9, 9a) des valeurs de luminosité présentes dans le motif lumineux (15) affecté.

7. Procédé selon la revendication 5 ou la revendication 6, **caractérisé en ce que** le dispositif de calcul (3) détecte dans le temps un changement de position de points lumineux de la matrice de signaux (23) reproduits sur le détecteur (5, 5a) et l'affecte à l'un des deux objectifs partiels (8, 9, 9a), indépendamment de la vitesse de changement.

8. Procédé selon l'une quelconque des revendications 5 à 7, **caractérisé en ce que** sous des conditions constantes d'une matrice lumineuse (23) détectée par le détecteur (5, 5a) et de la position d'au moins un point lumineux détecté par les deux objectifs partiels (8, 9, 9a) et identifié à l'aide d'un motif lumineux mémorisé, un rapport de reproduction des deux distances focales des objectifs partiels (8, 9, 9a) est calibré.

9. Procédé selon l'une quelconque des revendications 5 à 8, **caractérisé en ce que** les motifs lumineux (15, 22, 22a) des deux objectifs partiels (8, 9, 9a) sont reproduits à pleine surface sur la surface de capteur (6, 6a) et la matrice lumineuse est examinée au niveau de déplacements stellaires.

10. Procédé selon la revendication 9, **caractérisé en ce que** les points lumineux (28, 29, 30, 31, 32, 33) de différents gradients de déplacement sont examinés et affectés à l'un des deux motifs lumineux (15, 22, 22a), en fonction de leurs gradients de déplacement.

11. Procédé selon la revendication 9 ou la revendication 10, **caractérisé en ce qu'**un tracé de ligne dans la matrice de signaux (23) déterminé en fonction du motif lumineux (15, 22, 22a) est affecté à une rotation de la valeur d'un ou de plusieurs angles des trois axes (x) dans l'espace d'un engin spatial (100).

12. Procédé selon l'une quelconque des revendications 5 à 11, **caractérisé en ce que** sur un objectif partiel (9, 9a) à distance focale négative, des points lumineux (28, 29, 30, 31, 32, 33) sont affectés aux motifs lumineux (15, 22, 22a) au moyen d'une évaluation de leur direction de déplacement.

Fig. 1

Fig. 2

Fig. 3

Fig. 4

Fig. 5

Fig. 6

Fig. 7

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5745869 A

- US 20110051149 A1

**In der Beschreibung aufgeführte Nicht-Patentliteratur**

- **H.E. BRUNELLE et al.** Coaxial, Dual-Field Optics For a Space Sextant. *Applied Optics,* 1963, vol. 2 (12), 1265-1269

- **DANIELE MORTARI et al.** StarNav III: a three fields of view tracker. *IEEE Aerospace Conference,* 09. Marz 2002, vol. 1, ISBN 978-0-7803-7231-3, 47-57